# EUROPEAN PATENT SPECIFICATION

(11) **EP 3 298 501 B1**
(45) Date of publication and mention of the grant of the patent: **13.11.2019**
(21) Application number: 15745472.9
(22) Date of filing: 31.07.2015
(51) Int. Cl.: G06F 13/16, G06F 12/08

(54) **METHODS TO CREATE LOGICAL TREES OF MEMORY SYSTEMS**
VERFAHREN ZUR ERZEUGUNG LOGISCHER BÄUME AUS SPEICHERSYSTEMEN
PROCÉDÉS DE CRÉATION D'ARBORESCENCES LOGIQUES DE SYSTÈMES DE MÉMOIRE

(43) Date of publication of application: 28.03.2018
(73) Proprietor: Hewlett Packard Enterprise Development LP, Houston, TX 77070 (US)
(72) Inventor: VAQUERO GONZALEZ, Luis Miguel, Bristol BS34 8QZ (GB); SAE LOR, Suksant, Bristol BS34 8QZ (GB)
(74) Representative: Fleuchaus, Michael A.
(86) International application number: PCT/EP2015/067683
(87) International publication number: WO 2017/020934

(56) References cited:
- US-A1- 2004 243 769
- US-A1- 2008 198 769
- US-A1- 2013 301 440
- US-A1- 2015 178 197
- US-B1- 6 611 502

## Description

### BACKGROUND

A memory system is a system comprising a plurality of memory modules. Each memory module comprises a non-volatile memory unit and a controller connected to at least one port. The controller may access information stored in the non-volatile memory unit in response to a request from a processor, to deliver accessed information to the processor via the at least one port. Moreover, the controller communicates with controllers of other memory modules via the at least one port. The controllers may be connected so as to form a peer-to-peer network. US2008/0198769 discloses preventing loops in a communication network and generating a tree based on loop prevention.

The invention is set out in the appended set of claims. The dependent claims set out particular embodiments.

### BRIEF DESCRIPTION OF THE DRAWINGS

Figure 1 represents a memory system according to a particular example of the present disclosure.
Figure 2 represents a memory system according to another particular example of the present disclosure.
Figure 3 is a sequence diagram showing a method to create a logical tree of a memory system according to a particular example of the present disclosure.
Figure 4 is a sequence diagram showing a method to create a logical tree of a memory system according to another particular example of the present disclosure.
Figure 5 is a sequence diagram showing an example of a determining step of a root router memory module of the method of figure 4.
Figure 6 is a sequence diagram showing an example of an identifying step of a loop-free path of the method of figure 4.
Figure 7 is a sequence diagram showing another example of an identifying step of a loop-free path of the method of figure 4.
Figure 8 represents an example of root router memory module and paths in the memory system of figure 2.
Figure 9 is a sequence diagram showing a method to update a logical tree according to a particular example of the present disclosure.

### DETAILED DESCRIPTION

Some computing systems use memory systems referred to as "memory fabrics" that treat memory as if it were a routable resource (treating memory addresses somewhat in the way that IP networks handle IP addresses). Such memory fabrics may comprise many different memory elements that are logically interconnected and that may provide non-volatile storage of data. The interconnected memory elements may be logically "stacked" and exposed (e.g. to processors/computing modules) as if they were a single memory resource with a uniform memory space through an entry point acting similarly to a gateway in computer networks.

When a processor requests (reading or writing) access to a memory address in a memory fabric the memory addressing request may be directed via various modules of the memory fabric before arriving at the appropriate destination address.

Certain memory fabrics may implement protocols that are based on the assumption that there is only a single path to transmit a request from one particular point in the fabric to another.

A challenge arises in memory fabrics that use protocols which assume the existence of only a single path for transmission of a request from one point to another in a memory fabric. This may be a viable assumption in the case of a small, static and/or carefully designed fabric. However, there are circumstances in which there is no one exclusive path, for example when the size of the considered memory fabric scales up.

The situation may arise in a memory fabric, especially one involving large numbers of components, that there are plural paths for transmission of a request from one point to another in a memory fabric. This situation may lead to the occurrence of loops, where a memory addressing request is forwarded (directly or indirectly) from a first point to a second point in the memory fabric, based on a first one of multiple possible paths to a destination memory address, and then is returned from the second location to the first location based on a second one of the possible paths to the destination memory address.

A request caught in such a loop keeps on being re-directed. Thus, if a request to access a memory address is caught in a loop, this address will not be reached. A loop causes unpredictable behavior of the memory system and delays in addressing and fetching memory data.

Moreover, another challenge arises in memory fabrics that use protocols which assume the existence of only a single path for transmission for a request from one point to another in a memory fabric because, in the event that a memory module or memory component is removed or there is a failure or performance problem within the fabric, it may be impossible (or undesirable) to direct requests according to the single designated path.

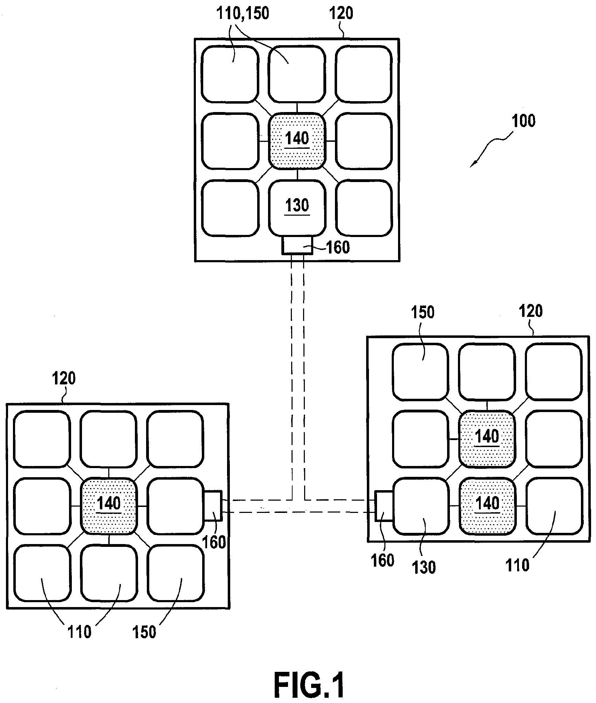

**Figure 1** schematically shows a memory system 100 according to a particular example of the present disclosure.

The memory system 100 according to the present example may be a memory fabric. The memory system 100 comprises a plurality of memory modules 110, each memory module 110 comprising a non-volatile memory unit and a controller. Each controller is to access information stored in the non-volatile memory unit in response to a request from a processor, to deliver accessed information to the processor, and to communicate with controllers of other memory modules. The controllers are connected so as to form a peer-to-peer network.

In the memory system 100, memory modules 110 are distributed between memory components 120.

Modules 110 in a memory component 120 may have the role of "router", "switch" or "plain memory module" and thus may comprise a router controller, a switch controller, or a plain memory controller, respectively.

More precisely, in this example, each memory component 120 of the memory system 100 comprises at least one memory module having a router controller (and which, thus, may be called a "router" 130 or a "router memory module" 130). A router controller is a controller which can route a message or a request to another router controller of the memory system, or to other(s) controller(s) in the same memory component as the router controller. A router controller is also responsible for all the routing-related tasks.

Each memory component 120 may also comprise a memory module having a switch controller (and which, thus, may be called a "switch" 140 or a "switch memory module" 140). A switch controller is a controller connected to the router controller and, if there is one, at least one plain memory controller in the same memory component. When a switch controller receives a message or a request from the router controller of the same memory component, it forwards the message or request to the plain memory controller to which the message or request is addressed.

Each memory component 120 may also comprise a memory module having a plain memory controller (and which, thus, may be called a "plain memory" 150 or a "plain memory module" 150). A plain memory controller is a controller which can forward a message or request received to another plain memory controller of the same memory component 120, which is its successor.

Management, utilization and access characteristics of the memory system 100 may change dynamically, so that the memory system 100 may automatically react if a memory component 120 (or a router memory module 130) is added to or removed from the memory system 100.

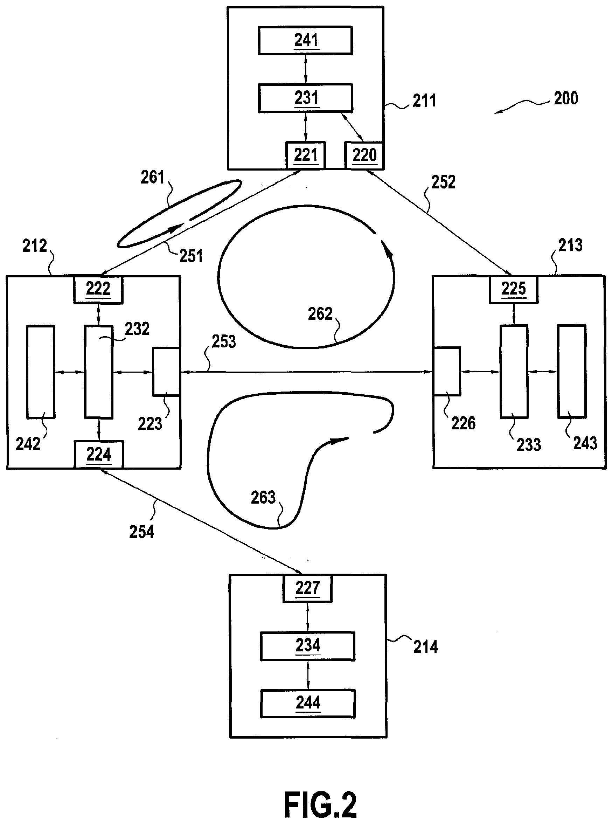

As illustrated in figure 1, the memory system 100 comprises a plurality of router memory modules 130 (or router 130). Each router memory module 130 comprises at least one port 160 to connect the router memory module 130 to at least another router memory module 130 of the memory fabric. Moreover, each router memory module 130 comprises a controller (see figure 2). Each controller of a router memory module 130 can determine a root router memory module of the memory system 100, identify a loop-free path from the router memory module 130 to the root router, and create a logical tree using the loop-free paths determined.

It is thus possible to prevent loops in the memory system 100, as this method enables finding out how the router memory modules 130 are organized in the memory system 100, and creating a logical tree, which is then used to route messages and requests.

**Figure 2** schematically shows a memory system 200 according to another particular example of the present disclosure.

The memory system 200 comprises four router memory modules 211, 212, 213, 214. In a variant, the memory system 200 comprises a different number of router memory modules. Each router memory module 211-214 comprises at least one port 220-227 to connect the router memory module 211-214 to at least another router memory module 211-214. Moreover, each router memory module 211-214 comprises a controller 231-234. Each router 211-214 further comprises a non-volatile memory unit 241-244.

In an example, the memory system 200 can comprise other memory modules, having controllers being switch controllers or plain memory controllers (not shown in the figures). Thus, each router memory module 211-214 can be located in a memory component, which can comprise other memory modules.

The connection 251-254 between two ports 220-227 of two routers 211-214 can be a wired connection (for example an optical connection), or a wireless connection.

Examples of loops 261, 262, 263 between ports 220-227 are shown in figure 2. The first loop 261 is between the ports 221 of router 211 and the port 222 of the router 212. This loop 261 is for example caused by inconsistent routing information within the memory system 200 (e.g. each controller 231 and 232 may have a different view of how a request should be routed). Taking a request destined to router 214 for example, the controller 231 of the router 211 may think the request should be sent via the router 212 and the controller 232 of the router 212 may think the request should be sent via the router 211.

The loop 262 is between the port 221 of the router 211, the ports 222 and 223 of the router 212, the ports 226 and 225 of the router 213 and the port 220 of the router 211. The loop 263 is between the port 227 of the router 214, the ports 224 and 223 of the router 212, and the port 226 of the router 213.

Memory systems according to the present disclosure perform creation of logical trees of the memory system. In the memory systems 100, 200 according to the example of figures 1 and 2, hardware, firmware and/or software elements 221-234 that contribute to implementation of a method to create a logical tree may be provided in all of the memory modules of the memory system 100, 200. Hardware, firmware and/or software elements that contribute to implementation of a method to create a logical tree may be provided in one or some additional components associated with the network of memory components.

The above-mentioned hardware, firmware or software may include one or both of a processor and a machine-readable storage medium storing programming instructions or code executable by the processor to perform operations of the method to create a logical tree. The above-mentioned hardware, firmware or software may include an application specific integrated circuit (ASIC) constructed to perform operations of the method to create a logical tree.

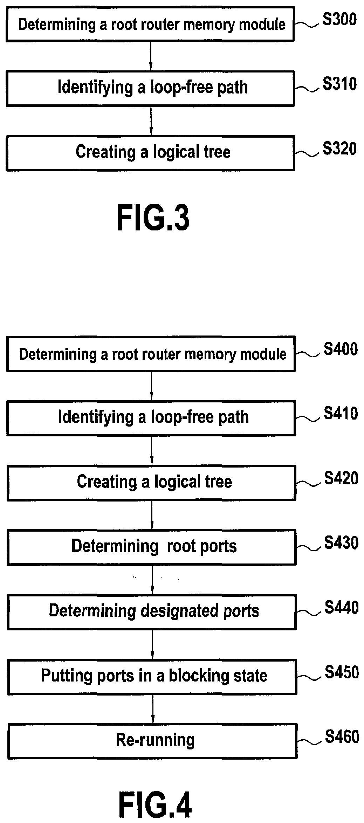

A method to create a logical tree of a memory system according to an example of the present disclosure will now be described with reference to **figure 3****.**

The memory system corresponds for instance to the one represented on figure 1 or figure 2. Therefore the memory system 100, 200 comprises a plurality of router memory modules 110, 211-214, each router memory module 110, 211-214 comprising at least one port 221-227 to connect the router memory module 110, 211-214 to at least another router memory module 110, 211-214.

A root router memory module of the memory system 100, 200 is determined (S300).

Then, for each router memory module 110, 211-214 apart from the root router memory module, a loop-free path from the router memory module 110, 211-214 to the root router memory module is identified (S310).

A logical tree using the loop-free paths determined is then created (S320).

It is thus possible to prevent loops in the memory system 100, 200, as this method enables finding out how the router memory modules 110, 211-214 are organized in the memory system 100, 200, and creating a logical tree, which is then used to route messages and requests.

**Figure 4** shows a method to create a logical tree of a memory system according to another example of the present disclosure.

The memory system corresponds for instance to the one represented on figure 2.

The root router memory module RMM of the memory system is determined (S400). Different approaches may be used to decide which router memory module should be the RMM.

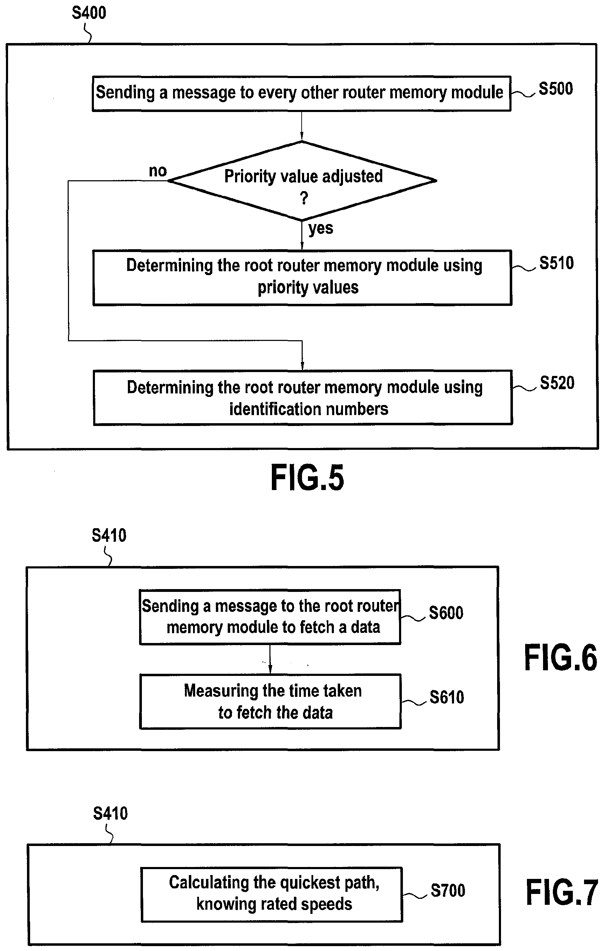

In an example, each router memory module sends (S500) a message to every other router memory module of the memory system, the message comprising an identification number and a priority value of the router memory module (see **figure 5****).**

The identification number uniquely identities this router memory module in the memory system. Furthermore, the priority value may be a configurable value.

If at least one router memory module has its priority value adjusted, the root router memory module RMM may be determined using the priority values of all the router memory modules (S510). For example, the router memory module having the lowest priority value may be determined, by all router memory modules, as the root router memory module. In a variant, the router memory module having the highest priority value may be determined, by all router memory modules, as the root router memory module.

If none of the router memory modules has its priority value adjusted, the root router memory module RMM may be determined using the identification numbers of all the router memory modules (S520). For example, the router memory module having the lowest identification number may be determined, by all router memory modules, as the root router memory module. In a variant, the router memory module having the highest identification number may be determined, by all router memory modules, as the root router memory module.

The root router memory module RMM is the router memory module which acts as the manager module for the whole logical tree of the memory system.

The messages sent may be Discovery Broadcast Messages ("DBM"), which are also sent out to determine if a connection between two memory components is still active or if a memory component is still in the memory system. These Discovery Broadcast Messages may be sent periodically (for instance every two seconds). Each Discovery Broadcast Message may comprise information about the memory module that sent this Each Discovery Broadcast Message, and a Component Identifier ("CID") that uniquely identities this memory module in the memory system. The Component identifier may comprise a configurable priority value and an identification number.

In a variant, each router memory module sends a message to an out band management subnet. The out band management subnet can be a designated memory module (e.g. with a default address or the first one that joins the memory system), or an external centralised server. Then, the out band management subnet can determine the root router memory module, from priority values or identification numbers, and inform all the router memory modules. The out band management subnet can also acts simply as a proxy to forward the information to the router memory modules.

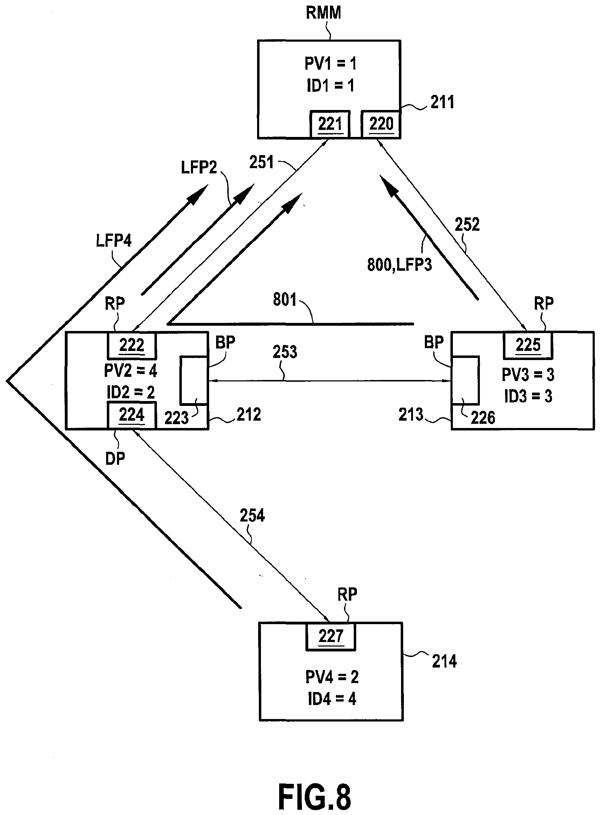

In the example of figure 2, the priority value PV1 of the router memory module 211 is for instance "1", and the identification number ID1 of the router memory module 211 is for instance "1" (see **figure 8**)**.** Furthermore, the priority value PV2 of the router memory module 212 is for instance "4", the identification number ID2 of the router memory module 212 is for instance "2", the priority value PV3 of the router memory module 213 is for instance "3", the identification number ID3 of the router memory module 213 is for instance "3", the priority value PV4 of the router memory module 214 is for instance "2", and the identification number ID4 of the router memory module 214 is for instance "4". In this example, the root router memory module RMM is the router memory module 211, which has the lowest priority value.

Then, each router memory module apart from the root router memory module identifies a loop-free path from the router memory module to the root router memory module (S410). Different approaches may be used for determining the loop-free paths.

In an example (see **figure 6**), to identify a loop-free path, each router memory module sends a message to the root router memory module to fetch a data in the root router (S600), and measures the time taken to fetch the data (S610). If the router memory module has a plurality of ports, a message is sent from each port. The loop-free path chosen by the router memory module is the quickest path to fetch the data.

Thus, if the speed of transmission is the same for each connection 251-254 between two ports, the chosen loop-free path will be the path with the fewest number of connections 251-254.

For example, in the memory system 200 of figure 2, the router memory module 213 has two ports 225 and 226, and two loop-free paths 800 and 801 exist between router memory module 213 and the root router memory module RMM (see figure 8). The loop-free path 800 comprises one connection 252, and the loop-free path 801 comprises two connections 253 and 251. The path with the fewest number of connections being the path 800, this path 800 is chosen as the loop-free path LFP3 between the router memory module 213 and the root router memory module RMM.

Figure 8 shows the three chosen loop-free paths LFP2, LFP3 and LFP4, all these paths being the path having the fewest number of connections between the corresponding router memory module 212, 213, 214 and the root router memory module RMM. Path LFP2 is a direct path, using the port 222 of router memory module 212, port 221 of router memory module 211, and the connection 251 between these two ports 222 and 221. Path LFP3 is a direct path, using the port 225 of router memory module 213, port 220 of router memory module 211, and the connection 252 between these two ports 225 and 220. Path LFP4 is an indirect path, using the port 221 of router memory module 211, the ports 222 and 224 of router memory module 212, the port 227 of router memory module 214, the connection 254 between port 227 and 224, and the connection 251 between port 222 and 221.

The messages sent may be Unicast Memory Addressing Messages.

In an example (see **figure 7**), to identify the loop-free path, each router memory module calculates (S700) the quickest path, knowing a rated speed of transmission of each connection between two router memory modules on each path between the router memory module and the root router memory module.

The rated speed of transmission depends of the technology of the connection (optical connection, wireless connection).

In an example, to identify a loop-free path, each router memory module calculates the shortest path.

A logical tree using the loop-free paths determined is created (S420). The logical tree is a map showing, for each router memory module, the chosen loop-free path from the router memory module to the root router memory module. The logical tree can be a branching structure being the sum of all the loop-free paths from each router to the root router. This map is used by the memory system to send messages or requests in normal case, namely when no router memory module is added or removed, and when no router memory module has a failure.

The logical tree is stored in at least one non-volatile location in the memory system. This non-volatile location may be considered to be a reference location and is readily accessible by all the router memory modules. The location of the reference location(s) within the memory fabric may be predetermined and, thus, the various modules in the memory fabric know where to find the stored loop-free configuration information For example, the non-volatile location is a pre-defined memory module address such as the first address within the range of addresses assigned to the memory system. In a variant, the non-volatile location is the first address of the memory module having the lowest CID in the initial memory system.

It is thus possible to prevent loops in the memory system, as this method enables finding out how the router memory modules are organized in the memory system, and creating a logical tree, which is then used to route messages and requests. A chosen loop-free path between a router memory module and the root router memory module will be used to send messages or requests between this router memory module and the root router memory module. This path being loop-free, the chance for a message or a request to be caught in a loop is thus reduced.

Then, each router memory module determines the port of the router memory module on which the loop-free path arrives as the root port RP of the router memory module (S430). In the example of figure 8, port 227 of the router memory module 214 is the root port RP of the router memory module 214, port 225 of the router memory module 213 is the root port RP of the router memory module 213, and port 222 of the router memory module 212 is the root port RP of the router memory module 212.

Furthermore, for each chosen loop-free path of a router memory module, if the path is going through at least one port of another router memory module, this port is determined as a designated port DP (S440). Thus, each port being on a loop-free path and being not a root port or a port of the root router memory module is determined as being a designated port DP.

In the example of figure 8, port 224 of the router memory module 212 is a designated port DP.

Then, if a port is not on at least one chosen loop-free path, this port BP is put into a blocking state (S450). A port that is not a port of the root router memory module, a root port or a designated port is thus put into the blocking state. Such a port BP is thus never used to transmit or forward a message or a request (although requests may be received via this port). The blocking of ports which are not on the chosen loop-free paths allows avoidance of a case where unintended loops are created by a bug in the addressing of a message or a request.

In the example of figure 8, port 223 of router memory module 212 and port 226 of router memory module 213 are put in a blocking state.

The logical tree can be completed by adding the root ports RP, the designated ports DP and the blocked ports BP.

Steps S400 to S450 can then be re-run, based on various failure scenarios (e.g. considering that a port of a router memory module or a router memory module of the memory system is inactive or down, i.e. not properly operational (S460). In an example, these steps are re-run for all the possible failure scenarios (combinations of malfunctioning router memory module or malfunctioning port). When considering a failure scenario in which a router memory module different from the root router memory module is inactive or down, step S400 does not need to be re-run.

The number of times the process is re-run depends on the nature of the topology within the memory system and possible loop-free alternative paths. In an example, these steps are re-run for router memory modules which are more likely to fail, and combinations of these router memory modules.

A plurality of logical trees are thus stored, including a logical tree showing the chosen loop-free paths in normal cases, and other logical trees showing the chosen loop-free paths in cases wherein one or a plurality of router memory modules/ports is inactive or down.

Thus, if a router memory module/port of the memory system is inactive or down, messages and requests can be immediately redirected according to an alternative loop-free path, because a logical tree made considering that this router memory module/port is inactive or down is stored in the memory system.

Accordingly, the method can be performed in an initialisation phase of the memory system, and does not need to be performed again during the use of the memory system. Furthermore, as the logical trees are stored in a non-volatile location, these logical trees are not lost if the memory system is turned off or goes down. Moreover, due to the massive capacity of the non-volatile location, as many logical trees as possible can be stored.

In the example of figure 8, it can be considered that port 222 of router memory module 121 is down to re-run steps S400-S450. An alternative logical tree wherein paths LFP2 and LFP4 do not exist is then created. Moreover, path LFP4 is replaced in the logical tree by a path using port 227 of router memory module 214, ports 224 and 223 of router memory module 212, port 226 and 225 of router memory module 213, port 220 of router memory module 211, connection 254 between ports 227 and 224, connection 253 between ports 223 and 226, and connection 252 between ports 225 and 220.

In an example, steps S400-S460 are performed only if there is no existing logical tree of the memory system, in the non-volatile location. If there is such a logical tree, the memory module use this logical tree and no other logical trees are created.

When a new router memory module is added to the memory system, the method to create logical tree is performed again. To prevent a complete recalculation, an incremental approach can be used, assuming the root is still the same root. In many cases, the entire logical trees need not be recomputed because most of the trees remain unchanged. Only the affected part of the tree is thus recomputed. Recomputing only a portion of the trees rather than the entire trees results in faster convergence and saves resources. Steps S410, S430, S440, and S450 are thus performed again for the router memory modules involved by this adding, and the existing trees are modifying using the results of these steps.

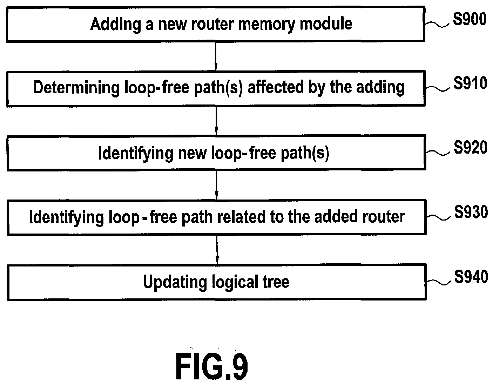

More precisely, when a new router memory module is added (S900, see **figure 9**), loop-free path(s) affected by the adding are determined (S910), as well as the corresponding router memory module(s). Then, for each router memory module determined, a new loop-free path from this router memory module to the root router memory module is identified, taking into account the adding (S920). Moreover, a loop-free path from the added router memory module to the root router memory module is identified (S930). Root ports, designated ports and blocked ports related to the loop-free paths identified can be also determined. The logical tree being already in the non-volatile location of the memory system is updated, using the loop-free paths determined (S940).

These steps can then be re-run, based on various failure scenarios (e.g. considering that a port of a router memory module or a router memory module of the memory system is down, i.e. not properly operational).

## Claims

1. A method comprising:
• determining (S300) a root router memory module of a memory system (100) comprising a plurality of router memory modules (130), each router memory module comprising at least one port (160) to connect the router memory module (130) to at least another router memory module (130),
• for each router memory module (130) apart from the root router memory module, identifying (S310) a loop-free path from the router memory module (130) to the root router memory module,
• creating (S320) a logical tree using the loop-free paths determined, **characterized in that** the identifying of a loop-free path comprises:
• sending (S600) a message to the root router memory module to fetch a data in the root router memory module,
• measuring (S610) the time taken to fetch the data,
• determining the quickest path to fetch the data as the loop-free path.

2. The method according to claim 1, comprising:
• responsive to determining that a port (160) is not on at least one loop-free path identified, putting the port into a blocking state (S450).

3. The method according to claim 1, comprising, for each router memory module (130) apart from the root router memory module:
• determining the port (160) of the router memory module on which the loop-free path arrives as the root port of the router memory module.

4. The method according to claim 1, comprising, for each loop-free path of a router memory module (130) identified:
• if the path is going through at least one port of another router memory module, determining said at least one port as a designated port.

5. The method according to claim 1, wherein the root router memory module determining step comprises:
• for each router memory module, sending (S500) a message to every other router memory module, the message comprising an identification number and a priority value of the router memory module,
• responsive to determining that at least one router memory module has its respective priority value adjusted, determining (S510) the root router memory module using the priority values of the router memory modules,
• responsive to determining that none of the router memory modules has its respective priority value adjusted, determining (S520) the root router memory module using the identification numbers of the router memory modules.

6. The method according to claim 5, wherein the message is a Discovery Broadcast Message, sent periodically.

7. The method according to claim 1, wherein the root router memory module determining step comprises:
• for each router memory module, sending a message to an Out Management Subnet, the message comprising an identification number and a priority value of the router memory module,
• the Out Management Subnet, responsive to determining that at least one router memory module has its respective priority value adjusted, determining the root router memory module using the priority values of the router memory modules,
• the Out Management Subnet, responsive to determining that none of the router memory modules has its respective priority value adjusted, determining the root router memory module using the identification numbers of the router memory modules.

8. The method according to claim 1, wherein the identifying step of a loop-free path from each router memory module to the root router memory module comprises, for each router memory module:
• calculating (S700) the quickest path, knowing a rated speed of each connection between two router memory modules on each path between the router memory module and the root router memory module.

9. The method according to claim 1, wherein the identifying step of a loop-free path from each router memory module to the root router memory module comprises, for each router memory module:
• calculating the shortest path from the router memory module to the root router memory module.

10. The method according to claim 1, comprising:
• storing the logical tree in at least one non-volatile location in the memory system.

11. The method according to claim 1, wherein a router memory module (130) of the memory system is considered to be inactive.

12. A method comprising:
• adding (S900) a router memory module to a memory system (100) comprising a plurality of router memory modules (130), each router memory module (130) comprising at least one port (160) to connect the router memory module to at least another router memory module (130), the memory system (100) further comprising a logical tree comprising a loop-free path from each router memory module (130) to a root router memory module of the memory system,
• determining (S910) at least one loop-free path affected by the adding, and the corresponding router memory module,
• identifying (S920) a new loop-free path from the corresponding router memory module to the root router memory module, taking into account the adding,
• identifying (S930) a loop-free path from the added router memory module to the root router memory module, updating (S940) the logical tree using the loop-free paths identified, **characterized in that** the identifying of a loop-free path comprises:
• sending (S600) a message to the root router memory module to fetch a data in the root router memory module,
• measuring (S610) the time taken to fetch the data,
• determining the quickest path to fetch the data as the loop-free path.

13. A memory system (100) comprising a plurality of router memory modules (130), each router memory module (130) comprising:
• at least one port (160) to connect the router memory module (130) to at least another router memory module (130),
• a controller to determine a root router memory module of the memory system (100), identify a loop-free path from the router memory module (130) to the root router memory module, and create a logical tree using the loop-free paths determined,
**characterized in that** the controller is to
• send (S600) a message to the root router memory module to fetch a data in the root router memory module,
• measure (S610) the time taken to fetch the data,
• determine the quickest path to fetch the data as the loop-free path.

14. The memory system according to claim 13, wherein each router memory module (130) comprises a memory unit.

## Patentansprüche

1. Verfahren, das Folgendes umfasst:
• Bestimmen (S300) eines Wurzelrouterspeichermoduls eines Speichersystem (100), das mehrere Routerspeichermodule (130) umfasst, wobei jedes Routerspeichermodul wenigstens einen Anschluss (160) umfasst, um das Routerspeichermodul (130) mit wenigstens einem anderen Routerspeichermodul (130) zu verbinden,
• für jedes Routerspeichermodul (130), abgesehen von dem Wurzelrouterspeichermodul, Identifizieren (S310) eines schleifenfreien Pfads von dem Routerspeichermodul (130) zu dem Wurzelrouterspeichermodul,
• Erzeugen (S320) einer logischen Baumstruktur unter Verwendung der bestimmten schleifenfreien Pfade, **dadurch gekennzeichnet, dass** das Identifizieren eines schleifenfreien Pfads Folgendes umfasst:
• Senden (S600) einer Nachricht an das Wurzelrouterspeichermodul, um Daten in dem Wurzelrouterspeichermodul abzuholen,
• Messen (S610) der benötigten Zeit, um die Daten abzuholen,
• Bestimmen des schnellsten Pfads, um die Daten abzuholen, als den schleifenfreien Pfad.

2. Verfahren nach Anspruch 1, das Folgendes umfasst:
• als Reaktion auf ein Bestimmen, dass ein Anschluss (160) sich nicht auf wenigstens einem identifizierten schleifenfreien Pfad befindet, Versetzen des Anschlusses in einen Sperrzustand (S450).

3. Verfahren nach Anspruch 1, das für jedes Routerspeichermodul (130), abgesehen von dem Wurzelrouterspeichermodul, Folgendes umfasst:
• Bestimmen des Anschlusses (160) des Routerspeichermoduls, an dem der schleifenfreie Pfad ankommt, als den Wurzelanschluss des Routerspeichermoduls.

4. Verfahren nach Anspruch 1, das für jeden identifizierten schleifenfreien Pfad eines Routerspeichermoduls (130) Folgendes umfasst:
• wenn der Pfad wenigstens einen Anschluss eines anderen Routerspeichermoduls durchläuft, Bestimmen dieses wenigstens einen Anschlusses als einen ausgewiesenen Anschluss.

5. Verfahren nach Anspruch 1, wobei der Schritt des Bestimmens des Wurzelrouterspeichermoduls Folgendes umfasst:
• für jedes Routerspeichermodul, Senden (S500) einer Nachricht an jedes andere Routerspeichermodul, wobei die Nachricht eine Identifikationsnummer und einen Prioritätswert des Routerspeichermoduls umfasst,
• als Reaktion auf ein Bestimmen, dass der jeweilige Prioritätswert wenigstens eines Routerspeichermoduls angepasst wurde, Bestimmen (S510) des Wurzelrouterspeichermoduls unter Verwendung der Prioritätswerte der Routerspeichermodu le,
• als Reaktion auf ein Bestimmen, dass der jeweilige Prioritätswert keines der Routerspeichermodule angepasst wurde, Bestimmen (S520) des Wurzelrouterspeichermoduls unter Verwendung der Identifikationsnummern der Routerspeichermodule.

6. Verfahren nach Anspruch 5, wobei die Nachricht eine Entdeckungsrundsendung ist, die periodisch gesendet wird.

7. Verfahren nach Anspruch 1, wobei der Schritt des Bestimmens des Wurzelrouterspeichermoduls Folgendes umfasst:
• für jedes Routerspeichermodul, Senden einer Nachricht an ein Ausgangsverwaltungsteilnetz (*Out Management Subnet*), wobei die Nachricht eine Identifikationsnummer und einen Prioritätswert des Routerspeichermoduls umfasst,
• Bestimmen des Wurzelrouterspeichermoduls unter Verwendung der Prioritätswerte der Routerspeichermodule durch das Ausgangsverwaltungsteilnetz, als Reaktion auf ein Bestimmen, dass der jeweilige Prioritätswert wenigstens eines Routerspeichermoduls angepasst wurde,
• Bestimmen des Wurzelrouterspeichermoduls unter Verwendung der Identifikationsnummern der Routerspeichermodule durch das Ausgangsverwaltungsteilnetz, als Reaktion auf ein Bestimmen, dass der jeweilige Prioritätswert keines der Routerspeichermodule angepasst wurde.

8. Verfahren nach Anspruch 1, wobei der Identifizierungsschritt eines schleifenfreien Pfads von jedem Routerspeichermodul zu dem Wurzelrouterspeichermodul für jedes Routerspeichermodul Folgendes umfasst:
• Berechnen (S700) des schnellsten Pfads, wobei die Nenngeschwindigkeit jeder Verbindung zwischen zwei Routerspeichermodulen auf jedem Pfad zwischen dem Routerspeichermodul und dem Wurzelrouterspeichermodul bekannt ist.

9. Verfahren nach Anspruch 1, wobei der Identifizierungsschritt eines schleifenfreien Pfads von jedem Routerspeichermodul zu dem Wurzelrouterspeichermodul für jedes Routerspeichermodul Folgendes umfasst:
• Berechnen des kürzesten Pfads von dem Routerspeichermodul zu dem Wurzelrouterspeichermodul.

10. Verfahren nach Anspruch 1, das Folgendes umfasst:
• Speichern der logischen Baumstruktur an wenigstens einem nicht flüchtigen Ort in dem Speichersystem.

11. Verfahren nach Anspruch 1, wobei ein Routerspeichermodul (130) des Speichersystems als inaktiv betrachtet wird.

12. Verfahren, das Folgendes umfasst:
• Hinzufügen (S900) eines Routerspeichermoduls zu einem Speichersystem (100), das mehrere Routerspeichermodule (130) umfasst, wobei jedes Routerspeichermodul (130) wenigstens einen Anschluss (160) umfasst, um das Routerspeichermodul mit wenigstens einem anderen Routerspeichermodul (130) zu verbinden, wobei das Speichersystem (100) ferner eine logische Baumstruktur umfasst, die einen schleifenfreien Pfad von jedem Routerspeichermodul (130) zu einem Wurzelrouterspeichermodul des Speichersystems umfasst,
• Bestimmen (S910) wenigstens eines schleifenfreien Pfads, der durch das Hinzufügen beeinflusst ist, und des entsprechenden Routerspeichermoduls,
• Identifizieren (S920) eines neuen schleifenfreien Pfads von dem entsprechenden Routerspeichermodul zu dem Wurzelrouterspeichermodul unter Berücksichtigung des Hinzufügens,
• Identifizieren (S930) eines schleifenfreien Pfads von dem hinzugefügten Routerspeichermodul zu dem Wurzelrouterspeichermodul,
Aktualisieren (S940) der logischen Baumstruktur unter Verwendung der identifizierten schleifenfreien Pfade, **dadurch gekennzeichnet, dass** das Identifizieren eines schleifenfreien Pfads Folgendes umfasst:
• Senden (S600) einer Nachricht an das Wurzelrouterspeichermodul, um Daten in dem Wurzelrouterspeichermodul abzuholen,
• Messen (S610) der benötigten Zeit, um die Daten abzuholen,
• Bestimmen des schnellsten Pfads, um die Daten abzuholen, als den schleifenfreien Pfad.

13. Speichersystem (100), das mehrere Routerspeichermodule (130) umfasst, wobei jedes Routerspeichermodul (130) Folgendes umfasst:
• wenigstens einen Anschluss (160), um das Routerspeichermodul (130) mit wenigstens einem anderen Routerspeichermodul (130) zu verbinden,
• einen Controller, um ein Wurzelrouterspeichermodul des Speichersystems (100) zu bestimmen, einen schleifenfreien Pfad von dem Routerspeichermodul (130) zu dem Wurzelrouterspeichermodul zu identifizieren, und eine logischen Baumstruktur unter Verwendung der bestimmten schleifenfreien Pfade zu erzeugen, **dadurch gekennzeichnet, dass** der Controller zu Folgendem dient:
• Senden (S600) einer Nachricht an das Wurzelrouterspeichermodul, um Daten in dem Wurzelrouterspeichermodul abzuholen,
• Messen (S610) der benötigten Zeit, um die Daten abzuholen,
• Bestimmen des schnellsten Pfads, um die Daten abzuholen, als den schleifenfreien Pfad.

14. Speichersystem nach Anspruch 13, wobei jedes Routerspeichermodul (130) eine Speichereinheit umfasst.

## Revendications

1. Procédé, consistant à :
• déterminer (S300) un module de mémoire de routeur racine d'un système de mémoire (100) comprenant une pluralité de modules de mémoire de routeur (130), chaque module de mémoire de routeur comprenant au moins un port (160) pour connecter le module de mémoire de routeur (130) à au moins un autre module de mémoire de routeur (130),
• pour chaque module de mémoire de routeur (130) à l'exception du module de mémoire de routeur racine, identifier (S310) un chemin sans boucle du module de mémoire de routeur (130) vers le module de mémoire de routeur racine,
• créer (S320) un arbre logique à l'aide des chemins sans boucle déterminés, **caractérisé en ce que** l'identification d'un chemin sans boucle consiste à :
• envoyer (S600) un message au module de mémoire de routeur racine pour extraire des données dans le module de mémoire de routeur racine,
• mesurer (S610) le temps nécessaire pour extraire les données,
• déterminer le chemin le plus rapide pour extraire les données en tant que chemin sans boucle.

2. Procédé selon la revendication 1, consistant à :
• en réponse à la détermination du fait qu'un port (160) n'est pas sur au moins un chemin sans boucle identifié, mettre le port dans un état de blocage (S450).

3. Procédé selon la revendication 1, consistant à, pour chaque module de mémoire de routeur (130) à l'exception du module de mémoire de routeur racine :
• déterminer le port (160) du module de mémoire de routeur sur lequel le chemin sans boucle arrive en tant que port racine du module de mémoire de routeur.

4. Procédé selon la revendication 1, consistant à, pour chaque chemin sans boucle d'un module de mémoire de routeur (130) identifié :
• si le chemin passe par au moins un port d'un autre module de mémoire de routeur, déterminer ledit au moins un port comme port désigné.

5. Procédé selon la revendication 1, dans lequel l'étape de détermination du module de mémoire de routeur racine consiste à :
• pour chaque module de mémoire de routeur, envoyer (S500) un message à chaque autre module de mémoire de routeur, le message comprenant un numéro d'identification et une valeur de priorité du module de mémoire de routeur,
• en réponse à la détermination du fait qu'au moins un module de mémoire de routeur a sa valeur de priorité respective ajustée, déterminer (S510) le module de mémoire de routeur racine à l'aide des valeurs de priorité des modules de mémoire de routeur,
• en réponse à la détermination du fait qu'aucun des modules de mémoire de routeur n'a sa valeur de priorité respective ajustée, déterminer (S520) le module de mémoire de routeur racine à l'aide des numéros d'identification des modules de mémoire de routeur.

6. Procédé selon la revendication 5, dans lequel le message est un message de découverte de diffusion, envoyé périodiquement.

7. Procédé selon la revendication 1, dans lequel l'étape de détermination du module de mémoire de routeur racine consiste à :
• pour chaque module de mémoire de routeur, envoyer un message à un sous-réseau de gestion de sortie, le message comprenant un numéro d'identification et une valeur de priorité du module de mémoire de routeur,
• pour le sous-réseau de gestion de sortie, en réponse à la détermination du fait qu'au moins un module de mémoire de routeur a sa valeur de priorité respective ajustée, déterminer le module de mémoire de routeur racine à l'aide des valeurs de priorité des modules de mémoire de routeur,
• pour le sous-réseau de gestion des sorties, en réponse à la détermination du fait qu'aucun des modules de mémoire de routeur n'a sa valeur de priorité respective ajustée, déterminer le module de mémoire de routeur racine à l'aide des numéros d'identification des modules de mémoire du routeur.

8. Procédé selon la revendication 1, dans lequel l'étape d'identification d'un chemin sans boucle de chaque module de mémoire de routeur vers le module de mémoire de routeur racine consiste à, pour chaque module de mémoire de routeur :
• calculer (S700) le chemin le plus rapide, connaître une vitesse nominale de chaque connexion entre deux modules de mémoire de routeur sur chaque chemin entre le module de mémoire de routeur et le module de mémoire de routeur racine.

9. Procédé selon la revendication 1, dans lequel l'étape d'identification d'un chemin sans boucle de chaque module de mémoire de routeur vers le module de mémoire de routeur racine consiste à, pour chaque module de mémoire de routeur :
• calculer le chemin le plus court à partir du module de mémoire de routeur vers le module de mémoire de routeur racine.

10. Procédé selon la revendication 1, consistant à :
• stocker l'arbre logique dans au moins un emplacement non volatil dans le système de mémoire.

11. Procédé selon la revendication 1, dans lequel un module de mémoire de routeur (130) du système de mémoire est considéré comme inactif.

12. Procédé consistant à :
• ajouter (S900) un module de mémoire de routeur à un système de mémoire (100) comprenant une pluralité de modules de mémoire de routeur (130), chaque module de mémoire de routeur (130) comprenant au moins un port (160) pour connecter le module de mémoire de routeur à au moins un autre module de mémoire de routeur (130), le système de mémoire (100) comprenant en outre un arbre logique comprenant un chemin sans boucle à partir de chaque module de mémoire de routeur (130) vers un module de mémoire de routeur racine du système de mémoire,
• déterminer (S910) au moins un chemin sans boucle affecté par l'ajout et le module de mémoire de routeur correspondant,
• identifier (S920) un nouveau chemin sans boucle du module de mémoire de routeur correspondant vers le module de mémoire de routeur racine, en tenant compte de l'ajout,
• identifier (S930) un chemin sans boucle entre le module de mémoire de routeur ajouté vers le module de mémoire de routeur racine,
mettre à jour (S940) l'arbre logique à l'aide des chemins sans boucle identifiés, **caractérisé en ce que** l'identification d'un chemin sans boucle consiste à :
• envoyer (S600) un message au module de mémoire de routeur racine pour extraire des données dans le module de mémoire de routeur racine,
• mesurer (S610) le temps nécessaire pour extraire les données,
• déterminer le chemin le plus rapide pour extraire les données en tant que chemin sans boucle.

13. Système de mémoire (100) comprenant une pluralité de modules de mémoire de routeur (130), chaque module de mémoire de routeur (130) comprenant :
• au moins un port (160) pour connecter le module de mémoire de routeur (130) à au moins un autre module de mémoire de routeur (130),
• un dispositif de commande pour déterminer un module de mémoire de routeur racine du système de mémoire (100), pour identifier un chemin sans boucle à partir du module de mémoire de routeur (130) vers le module de mémoire de routeur racine, et créer un arbre logique à l'aide des chemins sans boucle déterminés, **caractérisé en ce que** le dispositif de commande est destiné à
• envoyer (S600) un message au module de mémoire de routeur racine pour extraire des données dans le module de mémoire de routeur racine,
• mesurer (S610) le temps nécessaire pour extraire les données,
• déterminer le chemin le plus rapide pour extraire les données en tant que chemin sans boucle.

14. Système de mémoire selon la revendication 13, dans lequel chaque module de mémoire de routeur (130) comprend une unité de mémoire.
